# EUROPÄISCHE PATENTSCHRIFT

(11) **EP 1 031 190 B1**
(45) Veröffentlichungstag und Bekanntmachung des Hinweises auf die Patenterteilung: **02.04.2003**
(21) Anmeldenummer: 98965064.3
(22) Anmeldetag: 12.11.1998
(51) Int. Cl.: H04B 1/38, H04Q 7/32

(54) **VERFAHREN ZUR AKTUALISIERUNG VON IN EINEM MOBILEN KOMMUNIKATIONSENDGERÄT GESPEICHERTEN INFORMATIONEN UND KOMMUNIKATIONSENDGERÄT**
METHOD FOR ACTUALIZING INFORMATION STORED IN A MOBILE COMMUNICATIONS TERMINAL AND A COMMUNICATIONS TERMINAL
PROCEDE D'ACTUALISATION D'INFORMATIONS STOCKEES DANS UN TERMINAL DE COMMUNICATION MOBILE, ET TERMINAL DE COMMUNICATION

(30) Priorität: 14.11.1997 DE 19750364
(43) Veröffentlichungstag der Anmeldung: 30.08.2000
(73) Patentinhaber: ROBERT BOSCH GMBH, 70442 Stuttgart (DE)
(72) Erfinder: RYCHLAK, Stefan, D-31241 Ilsede (DE)
(86) Internationale Anmeldenummer: DE9803317
(87) Internationale Veröffentlichungsnummer: WO99026351

(56) Entgegenhaltungen:
- EP-A- 0 706 295
- WO-A-97/16938

## Beschreibung

### Stand der Technik

Die Erfindung geht von einem Verfahren zur Aktualisierung von in einem für mobilen Einsatz vorgesehenen Kommunikationsendgerät, insbesondere einem Autoradio mit integriertem Mobilfunktelefon, gespeicherten Informationen und einem Kommunikationsendgerät nach der Gattung der unabhängigen Patentansprüche aus.

Heutige Kommunikationsendgeräte wie z. B. Mobilfunktelefone oder auch Autoradiogeräte werden in der Regel durch in den Geräten gespeicherten Betriebsprogrammen gesteuert. Diese Betriebsprogramme sind bei den genannten Geräten in der Regel in einem Mikroprozessor zur Steuerung der Funktionen der Geräte oder einem dem Mikroprozessor zugeordneten nichtflüchtigen Festwertspeicher (ROM) abgelegt. Eine Änderung oder Ergänzung der Betriebssoftware solcher Geräte ist, sofern überhaupt vorgesehen, nur dadurch möglich, daß nach Öffnen der Geräte die die Software enthaltenen Prozessoren oder Speicherteile ausgetauscht werden.

So sind beispielsweise aus dem Prospekt "Programm 97 - Sound und Fahrvergnügen pur. Mobile Kommunikation von Blaupunkt." der Firma Blaupunkt unter dem Namen Radiophon Autoradios, wie beispielsweise das Gerät vom Typ "Amsterdam TCM 127" bekannt, die neben der eigentlichen Autoradiofunktionalität auch über ein integriertes Mobilfunktelefon verfügen. Auch bei diesem Gerät, bei dem ein Großteil der zur Verfügung stehenden Funktionen in Form von Betriebsprogrammen realisiert sind, sind die dazu erforderlichen Softwarebestandteile in einem nichtflüchtigen Festwertspeicher abgelegt, so daß eine nachträgliche Änderung oder Ergänzung der Gerätesoftware ebenso wie eine nachträgliche Aufstockung der Funktionalität des Gerätes nicht möglich ist.

Aus WO-A-97 16938 ist ein Verfahren zur Aktualisierung von in mobilen Stationen verwandten Betriebsprogrammen bekannt, bei dem beim Einbuchen einer Mobilstation in ein Kommunikationsnetz vom Netzbetreiber eine Überprüfung des in der Mobilstation gespeicherten Betriebsprogramms veranlaßt wird, und im Falle einer nicht passenden oder nicht aktuellsten Version der Betriebsprogramme diese auf die Mobilstation überspielt werden. Bei einer Ausführungsform des beschriebenen Verfahrens wird der Benutzer der Mobilstation im Falle eines nicht passenden oder aktuellen Betriebsprogramms über das Vorliegen einer passenden oder aktuellen Betriebsprogrammversion informiert und kann diese unter einer speziellen Serviceadresse abrufen.

Weiter ist aus DE-A- 41 39 581 ein sogenanntes "Off-Board"-Navigationssystem bekannt, bei dem nach Eingabe eines Zielorts durch den Benutzer an einer fahrzeugfesten Einreichtung dieser zusammen mit dem aktuellen Fahrzeugstandort an eine Zentrale übertragen wird, dort eine Fahrtroute vom Stand- zum Zielort ggf. unter Berücksichtigung aktueller Straßenzustandsinformationen berechnet wird, und aufgrund der berechneten Route Fahrtempfehlungen von der Zentrale an den Fahrzeugführer übermittelt werden.

### Vorteile der Erfindung

Ein erfindungsgemäßes Kommunikationsendgerät mit den Merkmalen des unabhängigen Sachanspruchs hat demgegenüber den Vorteil, daß in dem Gerät gespeicherte Informationen, beispielsweise also das Betriebsprogramm eines Autoradios auf Wunsch des Gerätebenutzers, nachträglich durch Überspielen der erforderlichen Informationen von einem mit dem Kommunikationsendgerät verbundenen Informationsanbieter zum Kommunikationsendgerät ersetzt oder ergänzt werden können.

Von besonderem Vorteil ist es dabei, wenn das Kommunikationsendgerät über ein Funkgerät, beispielsweise ein Mobilfunktelefon verfügt, da in diesem Falle eine Aktualisierung der im Gerät gespeicherten Informationen an beliebigen Standorten des erfindungsgemäßen Gerätes durchgeführt werden kann. Damit entfällt beispielweise im Falle eines Autoradios der Aufwand für den Ausbau desselben aus dem Kraftfahrzeug und die damit verbundene Gefahr der Beschädigung des Geräts ebenso, wie der Aufwand zur Verbringung des Geräts zu einer autorisierten Servicestation, die über die erforderlichen Mittel zur Aktualisierung der im Gerät gespeicherten Informationen verfügt.

Weiterhin ist es von Vorteil, wenn das erfindungsgemäße Gerät über eine Anzeigevorrichtung zur Anzeige der von einem Informationsanbieter zur Verfügung gestellten Informationen verfügt, da hierdurch für den Benutzer des erfindungsgemäßen Geräts eine Auswahl der erforderlichen oder gewünschten Informationsteile zur Aktualisierung der im Gerät gespeicherten Informationen erleichtert wird.

Das erfindungsgemäße Verfahren mit den Merkmalen der unabhängigen Verfahrensansprüche hat den Vorteil, daß auf einfache Weise eine nachträgliche Aktualisierung der in einem erfindungsgemäßen Gerät gespeicherten Informationen auf einfache Weise ermöglicht wird. So können beispielsweise durch das erfindungsgemäße Verfahren aktualisierte oder fehlerbereinigte Versionen der Betriebssoftware eines erfindungsgemäßen Geräts dem Gerät auf einfache Weise zugegänglich gemacht werden. Besonders vorteilhaft ist eine solche Aktualisierung beispielsweise der Betriebssoftware dann, wenn, wie im zweiten unabhängigen Verfahrensanspruch beschrieben, die Aktualisierung der in dem erfindungsgemäßen Gerät gespeicherten Informationen ohne Zutun des Benutzers des Geräts allein auf Betreiben des Informationsanbieters, beispielsweise also des Gerätesherstellers, erfolgt.

Mit dem erfindungsgemäßen Verfahren wird es außerdem möglich, beispielsweise den Funktionsumfang eines Kommunikationsendgerätes auch nachträglich durch Nachladen der dafür erforderlichen Softwareteile zu erhöhen. Damit entfällt für den Benutzer die Notwendigkeit, für den Fall, daß er eine gesteigerte Funktionalität bei seinem Gerät wünscht, ein vollständig neues Gerät zu erwerben. Schließlich ermöglicht das erfindungsgemäße Verfahren auch den kurzfristigen Abruf von dem Benutzer des Geräts interessierenden Informationen, wie beispielsweise aktualisierte Daten für ein Kraftfahrzeugnavigationssystem, in die beispielsweise neue Verkehrswege oder auch Dauerbaustellen mit aufgenommen sind.

Zur Erleichterung der Auswahl der von einem Diensteanbieter zur Verfügung gestellten Informationen ist es von Vorteil, wenn nach Herstellung einer Verbindung zwischen Kommunikationsendgerät und Informationsanbieter eine Liste der verfügbaren Informationen an das Kommunikationsendgerät übertragen werden und dort zur Anzeige gebracht werden.

### Zeichnungen

Ausführungsbeispiele der Erfindung sind in den Zeichnungen dargestellt und werden im folgenden näher erläutert.

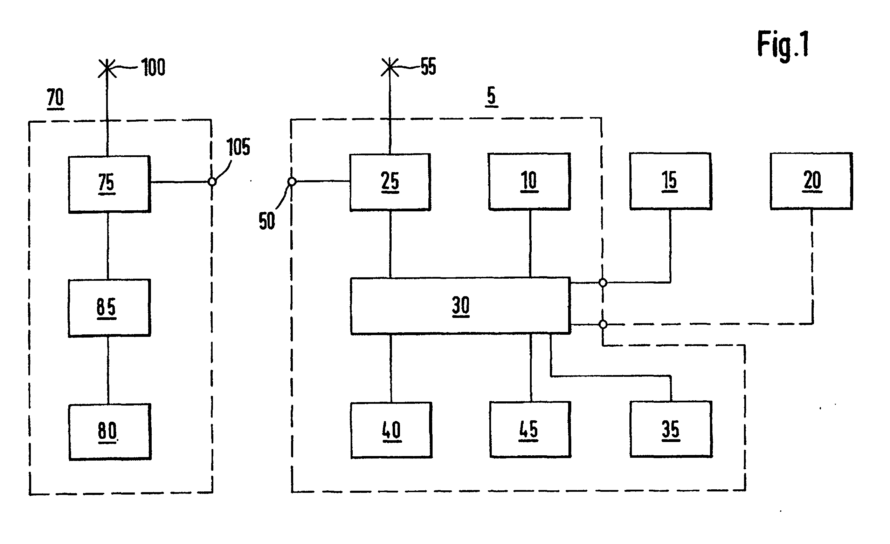

Es zeigen Figur 1 ein Blockschaltbild eines erfindungsgemäßen Kommunikationsendgeräts und eines Informationsanbieters und

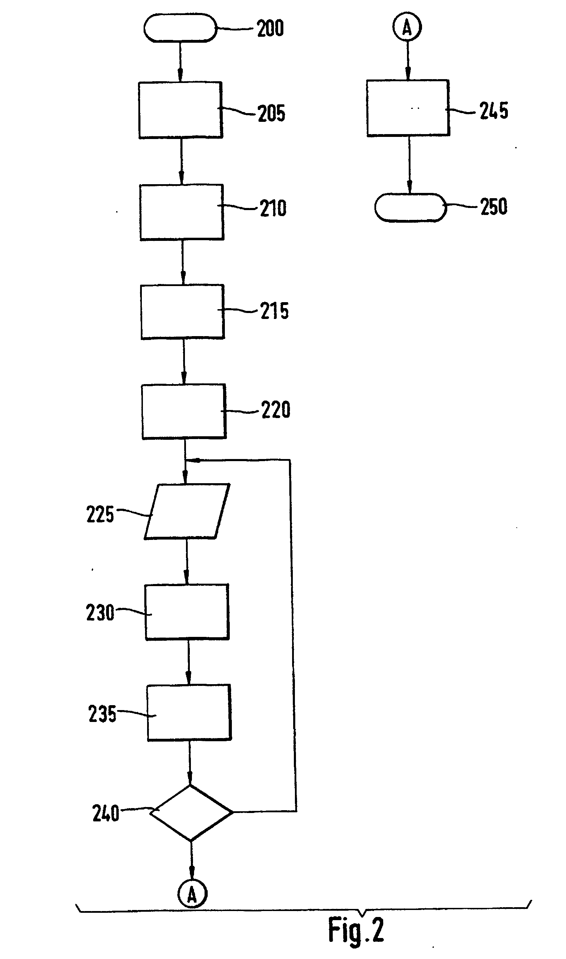

Figur 2 einen Ablaufplan des erfindungsgemäße Verfahrens.

### Beschreibung eines Ausführungsbeispiels

Das erfindungsgemäße Gerät und das erfindungsgemäße Verfahren werden im folgenden am Beispiel eines Autoradios mit integriertem Mobilfunktelefon, im folgenden in Anlehnung an die im eingangs erwähnten Blaupunkt-Prospekt gewählte Produktbezeichnung "RadioPhone", als "Radiofon" bezeichnet, erläutert. Dies ist jedoch nicht im Sinne einer Einschränkung der Erfindung dahingehend zu verstehen, daß diese auf Radiofone beschränkt wäre. Vielmehr ist eine Anwendung des erfindungsgemäßen Verfahrens auch bei anderen für einen mobilen Einsatz vorgesehenen elektronischen Geräten, wie beispielsweise Mobilfunktelefonen bzw. Funkgeräten allgemein, Autoradios und Kraftfahrzeug-Navigationssystemen vorgesehen.

Ein erfindungemäßes Gerät in Form eines Radiofons ist schematisch in Figur 1 dargestellt. Das erfindungsgemäße Gerät enthält einen zentralen Mikroprozessor 30 zur Steuerung zumindest eines Teil der an ihn angeschlossenen Komponenten des Geräts 5, wie im vorliegenden Fall eines Rundfunkempfängers 10, eines zusätzlich extern an das Gerät 5 angeschlossenen Kraftfahrzeug-Navigationssystems 15 und eines Mobilfunktelefons 25, das beim vorliegenden Ausführungsbeispiel die zur Durchführung des erfindungsgemäßen Verfahrens erforderlichen Funktionen einer Sende- und Empfangseinheit 25 übernimmt.

Zur Steuerung der diversen Funktionen des Geräts 5 sowie der in ihm enthaltenen und der extern angeschlossenen Komponenten 10, 15 und 25 greift der Mikroprozessor auf einen nichtflüchtigen Speicher 40 zu, in dem die zum Betrieb der Funktionen und Komponenten des Geräts erforderlichen Informationen, das heißt, Betriebsprogramme, und zum Beispiel Sendertabellen für den Rundfunkempfänger und Daten für das Navigationssystem in Form einer elektronischen Landkarte abgelegt sind. Der nichtflüchtige Speicher 40 ist dabei im vorliegenden Fall als lösch- und wiederbeschreibbarer Speicher in Form eines sogenannten FLASH-EPROMs ausgeführt, so daß die in ihm gespeicherten Informationen ohne mechanische Eingriffe in das Gerät 5 überschrieben bzw. ergänzt werden können.

Weiterhin ist an den Mikroprozessor 30 ein Bedienteil 35 angeschlossen, das die zur Bedienung der Funktionen und Komponenten des Geräts, sowie der an das Gerät angeschlossenen bzw. anschließbaren externen Komponenten erforderlichen Bedienelemente und eine Anzeigeeinheit zur Anzeige des Betriebszustandes des Geräts umfaßt. Schließlich steht der Mikroprozessor 30 noch mit einem nichtflüchtigen Festwertspeicher (ROM, 45) in Verbindung, in dem die zur Durchführung des erfindungsgemäßen Verfahrens erforderlichen Routinen abgelegt sind.

In Figur 1 ist weiterhin ein Anbieter 70 für aktuelle Informationen, die zur Aktualisierung oder Ergänzung der im Radiofon 5 abgelegten Informationen durch das Radiofon 5 abgerufen werden können, dargestellt.

Bei dem Anbieter 70 handelt es sich beim vorliegenden Ausführungsbeispiel um eine Service-Stelle des Geräteherstellers, zum Beispiel der Firma Blaupunkt. Diese stellt beispielsweise aktualisierte Versionen der für den Betrieb des Radiofons 5 erforderlichen Betriebsprogramme, Softwaremodule zur Erhöhung bzw. Aufstockung des Funktionsumfangs des Endgeräts 5 und beispielsweise aktualisierte Informationen für die zum Betrieb des an das Kommunikationsendgerät 5 angeschlossenen Kraftfahrzeug-Navigationssystems 15 benötigte elektronische Landkarte, bei der zum Beispiel neue Verkehrsverbindungen oder lang andauernde Langzeitbaustellen ergänzt worden sind, zur Verfügung.

Zur Herstellung einer Verbindung zwischen Anbieter 70 und Kommunikationsendgerät 5 und zur Kommunikation mit dem Kommunikationsendgerät 5 verfügt der Diensteanbieter über eine Sende- und Empfangseinheit 75, bei der es sich beim vorliegenden Ausführungsbeispiel um einen über ein Modem an einen Servicerechner angeschlossenen Telefonanschluß handelt. Dieser ist, wie in Figur 2 durch die Sende- und Empfangsantenne 100 angedeutet, auch über Funk, das heißt, beispielsweise mittels eines Mobilfunktelefons anwählbar.

Die Sende- und Empfangseinheit 75 des Anbieters 70 ist mit einer zentralen Steuerung 85 des Anbieters verbunden, der neben der Identifikation eines den Anbieter adressierenden Kommunikationsendgeräts 5 auch die Steuerung der anbieterseitig erforderlichen Schritte zum Verbindungsaufbau und zur Kommunikation mit dem anrufenden Kommunikationsendgerät 5 sowie der Übertragung der durch das Kommunikationsendgerät 5 ausgewählten Informationen bzw. Informationsbestandteile zukommt. Die Steuerung 85 des Informationsanbieters 70 greift dabei auf einen Speicher 80 zurück, in dem die ständig auf aktuellem Stand gehaltenen Informationen, wie aktualisierte Betriebssoftware für das Radiofon 5, Routinen für ergänzende Funktionen, wie zum Beispiel zur Steuerung von an das Gerät 5 extern anschließbarer Komponenten, abgelegt sind.

Der Ablauf des erfindungsgemäßen Verfahens zur Aktualisierung der in dem Kommunikationsendgerät 5 gespeicherten Informationen wird im folgenden anhand des in Figur 2 dargestellten Ablaufplans erläutert.

Die Notwendigkeit einer Ergänzung der Betriebssoftware eines bestehenden Geräts 5 ergibt sich beispielsweise dadurch, daß ein Autoradio- bzw. Radiofon-Benutzer sein Gerät um ein externes Compaktdisk-Abspielgerät, kurz CD-Wechsler, erweitern möchte, das Gerät jedoch nicht über die zu dessen Steuerung erforderlichen Softwarebestandteile verfügt.

Der Ablauf des erfindungsgemäßen Verfahrens beginnt mit dem Schritt 200, nachdem der Benutzer des Geräts 5 im Bedienmenue bzw. über ein Bedienelement an der Bedieneinheit 35 des Geräts die Funktion "Funktionsumfang erweitern" aktiviert hat, mit dem Auslesen der für die Steuerung des Ablaufs des Verfahrens erforderlichen Programmbestandteile aus dem Festwertspeicher 45, in dem auch die Adresse des Informations-Anbieters 70 abgelegt ist. Im Schritt 205 veranlaßt nun der Mikroprozessor 30 des erfindungsgemäßen Geräts 5 die Adressierung eines Informationsanbieters 70, im vorliegenden Fall also die Anwahl des Telefonanschlusses 75 der Servicestelle des Geräteherstellers durch das hier als Sende- und Empfangs-Einheit 25 fungierende Mobilfunkmodul 25 des erfindungsgemäßen Kommunikationsendgeräts 5. Steht der angewählte Informationsanbieter 70 zur Übertragung von Informationen bereit, so erfolgen im Schritt 210 die seitens des Radiofons 5 und des Informationsanbieters 70 erforderlichen Schritte zum Aufbau einer Verbindung zwischen Radiofon 5 und Servicestelle 70, das heißt, zwischen Mobilfunk-Modul 25 des Radiofons 5 und dem Telefonanschluß 75 der Servicestelle. Für den Fall, daß wie im vorliegenden Fall bei der Ergänzung der Gerätesoftware zum Betrieb eines CD-Wechslers für den Abruf von Informationen durch das Kommunikationsendgerät 5 Gebühren erhoben werden sollen, erfolgt in einem Zwischenschritt 215 eine Identifizierung des anrufenden Kommunikationsendgeräts 5. Eine solche Identifizierung ermöglicht zum Beispiel im Falle eines GSM-Mobilfunkmoduls 25 die auf der zum Betrieb des Mobilfunk-Telefons 25 erforderlichen SIM-Karte gespeicherte Identifizierungsnummer, die dem Informations-Anbieter 70 über die bestehende Verbindung Kommunikationsendgerät/Anbieter 70 mitgeteilt wird.

Nach erfolgter Identifizierung des Kommunikationsendgeräts 5 durch den Anbieter 70 überträgt dieser im Schritt 220 eine Liste der durch ihn zur Verfügung gestellten Informationen, beim vorliegenden Beispiel also eine Liste der anbieterseitig verfügbaren Softwaremodule zur Erweiterung des Funktionsumfangs des erfindungsgemäßen Geräts 5, die über eine Anzeigevorrichtung der Bedieneinheit 35 des Kommunikationsendgeräts 5 angezeigt wird. Nach Auswahl der gewünschten Informationen, im vorliegenden Fall der zum Betrieb des extern angeschlossenen CD-Wechslers erforderlichen Softwarebestandteile durch den Benutzer über die Bedieneinheit 35 des Radiofons 5 im Schritt 225 erfolgt im Schritt 230 die Übertragung der vom Benutzer ausgewählten Informationen vom informations-Anbieter 70 zum Kommunikationsendgerät 5 vom Servicerechner des Anbieters über den Telefonanschluß des Anbieters, eine Sendestation des Mobilfunknetzes, die im vorliegenden Fall durch die Sende- und Empfangsantenne 100 des Anbieters 70 symbolisiert ist, die Sende- und Empfangsantenne 55 des Kommunikationsendgeräts 5, das daran angeschlossene Mobilfunk-Modul 25 des Endgeräts 5 zu dessen Mikroprozessor 30, der die zur Ergänzung der im Speicher 40 abgelegten Informationen erforderlichen Schritte einleitet und somit im Schritt 235 das Betriebsprogramm des Radiofons durch die übertragene neuen Software-Bestandteile ergänzt.

Durch eine ergänzende Abfrage in einem Zwischenschritt 240 kann dem Benutzer die Möglichkeit eingeräumt werden, die bereits bestehende Verbindung zwischen Informations-Anbieter 70 und Kommunikationsendgerät 5 zur Abfrage weiterer Informationen zu nutzen. Sind weitere Informationen durch den Benutzer gewünscht, was dieser durch Betätigung eines Bedienelements an der Bedieneinheit 35 mitteilt, kehrt der Ablauf zum Schritt 225 zurück, das heißt, der Benutzer des Geräts kann weitere Informationen auswählen.

Wünscht der Benutzer dagegen keine weiteren Informationen, was er ebenfalls in Schritt 240 durch Betätigen eines Bedienelements an der Bedieneinheit 35 kundtut, so geht der Ablauf zu Schritt 245 über, wo die Verbindung zwischen Kommunikationsendgerät und Anbieter 70 abgebaut wird. Außerdem werden hier, sofern es sich um kostenpflichtige Informationen gehandelt hat, die Kosten für den Abruf berechnet und eine Rechnung für den Kunden erstellt. Das Verfahren endet schließlich mit Schritt 250.

Handelt es sich bei den abgerufenen Informationen um einen kostenpflichtigen Service des Anbieters 70, so können die dafür anfallenden Gebühren beispielsweise in an sich bekannter Weise über die Telefonrechnung abgerechnet werden.

In analoger Weise können durch das erfindungsgemäße Kommunikationsendgerät 5 bei einem Informationsanbieter 70 auch andere Informationen, wie beispielsweise herstellerseitig aktualiserte, das heißt, erweiterte oder beispielsweise fehlerbereinigte Versionen der Betriebssoftware oder von Teilen der Betriebssoftware für das Gerät 5 angefordert werden.

Auch ist es möglich, aktualisierte Informationen für zum Betrieb des angeschlossenen Kraftfahrzeug-Navigationssystems 15 erforderlichen elektronisch gespeicherten Landkarten, wie beispielsweise neue Verkehrsverbindungen oder Informationen über lang andauernde Dauerbaustellen abzurufen. Dabei müssen diese Informationen nicht wie beschrieben notwendig beim Gerätehersteller als Informationsanbieter 70 abgerufen werden, vielmehr ist es auch möglich, beispielsweise Fahrtrouten für das Kraftfahrzeug-Navigationssystem 15 bei einem über einen solchen Service verfügenden alternativen Diensteanbieter 70, wie beispielsweise einen Automobilclub oder einem sonstigen freien Anbieter anzufordern.

Ebenso ist es denkbar, daß der Benutzer des Geräts beispielsweise bei Antritt einer längeren Autofahrt die aktuellen, die gewählte Reiseroute betreffenden Verkehrsinformationen von einem über solche Informationen verfügenden Anbieter 70 abruft, die dann in dem Speicher des Geräts abgelegt werden, und auf die z. B. das an der Gerät 5 angeschlossene Navigationssystem 15 zur Berechnung einer Ausweichroute zurückgreifen kann. Dabei ist es weiterhin möglich, die abgerufenen und gespeicherten Verkehrsinformationen über die Anzeige der Bedieneinheit 35 oder auch auf akustischem Wege auf Wunsch des Gerätebenutzers diesem zur Kenntnis zu bringen.

Hierzu ist es erforderlich, daß die im Festwertspeicher 45 abgelegte Software zur Durchführung des erfindungsgemäßen Informations-Aktualisierungsverfahrens statt der vorgegebenen Adresse des Geräteherstellers auch die Anwahl eines anderen Anbieters 70 über die Bedieneinheit 35 des Geräts ermöglicht.

Während bei dem bisher beschriebenen Ausführungsbeispiel davon ausgegangen wurde, daß die Übertragung aktueller Informationen vom Informationsanbieter 70 zum Kommunikationsendgerät 5 durch den Benutzer des Kommunikationsendgeräts 5 iniziiert wird, ist es bei einem alternativen Ausführungsbeispiel vorgesehen, daß ein Informationsanbieter 70, insbesondere der Gerätehersteller, einer Aktualisierung von im Gerät gespeicherten Informationen von sich aus ohne Zutun des Gerätebenutzers vornimmt. Diese Vorgehensweise erweist sich beispielsweise dann als sinnvoll, wenn zum Beispiel ein Gerätehersteller gravierende Fehler in der Betriebssoftware von ihm vertriebener Geräte festgestellt hat und diese beheben möchte. In diesem Fall kann eine aus der Automobilbranche bekannte und sowohl für den Gerätebenutzer, wie auch den Gerätehersteller aufwendige Rückrufaktion vermieden werden.

Ein anderer Einsatzfall ist denkbar, wenn beispielsweise ein Mobilfunknetz-Betreiber Details in Übertragungsstandards ändert, so daß für die Mobilfunkgeräte eine angepaßte Software benötigt wird. Auch hier kann ohne Zutun des Benutzers und ohne Inanspruchnahme von Werkstattleistung eine Anpassung der für den Betrieb des Geräts erforderlichen Betriebssoftware erfolgen.

Das vorgeschlagene alternative Verfahren zur Aktualisierung von im Endgerät 5 gespeicherten Informationen unterscheidet sich von dem bschriebenen und in Figur 2 dargestellten Verfahren in den Schritten 200, 205, 215 bis 225 und 240.

Wie bereits erwähnt, erfolgt die Aktualisierung beim vorliegenden Ausführungsbeispiel nichtbenutzer- sondern anbieteriniziiert, so daß der Ablauf in Schritt 200 mit der Auswahl der Geräte (-Typen) beginnt, bei denen Informationen aktualisiert werden sollen. Im o. a. Fall von Mobilfunktelefonen sind dies beispielsweise alle im Betrieb befindlichen Geräte, die noch nicht nach dem gewünschten neuen Standard funktionieren. Im Schritt 205 werden alle ausgewählten Geräte oder eines nach dem anderen adressiert und anschließend in Schritt 210 Verbindungen hergestellt. Die Schritte 215 bis 225 entfallen bei diesem Ausführungsbeispiel. Das Verfahren wird somit bei Schritt 230 mit der Übertragung der aktuellen Informationen vom Anbieter 70 zum Mobilfunktelefon 5 fortgesetzt, durch die die im Kommunikationsendgerät gespeicherten Informationen im Schritt 235 ergänzt bzw. ersetzt werden. Nach Abschluß der Aktualisierung (Schritt 240 entfällt), wird bei Schritt 245 die Verbindung abgebaut und das Verfahren bei 250 beendet.

Ein weiteres Ausführungsbeispiel der Erfindung richtet sich auf den Fall, daß das erfindungsgemäße Gerät 5 im Gegensatz zu dem im Zusammenhang mit Figur 1 beschriebenen Gerät über keine eigene Funk-Sende- und Empfangseinheit verfügt. Ein Beispiel für solche Geräte stellen beispielsweise konventionelle Autoradiogeräte dar.

Soll bei solchen Geräten mittels des erfindungsgemäßen Verfahrens eine Aktualisierung von im Gerät gespeicherten Informationen erfolgen, ist es erforderlich, diese über an ei geeignete Schnittstelle des Geräts angeschlossene Leitungen mit einem Informationsanbieter 70 zu verbinden.

Beim vorliegenden Ausführungsbeispiel ist es vorgesehen, den von Blaupunkt-Autoradios bekannten in Figur 1 durch den Anschluß 50 der Sende- und Empfangseinheit 25 angedeuten Key-Card-Leser als Schnittstelle zu verwenden. Dazu wird eine Key-Card-Emulation, das heißt, eine über Leitungen mit einem Service-Rechner über einen dafür vorgesehenen Anschluß 105 verbundene Key-Card-Attrappe, deren an ihrer Oberfläche aufgebrachten Kontakte, mit den Leitungen verbunden sind, in den Kartenleser eingesetzt, so daß der mit dem im Kartenleser angeordneten Gegenkontakten verbundene Mikroprozessor 30 des Autoradios 5 mit dem Servicerechner des Anbieters 70 in Verbindung steht.

Abgesehen von der nun nicht erforderlichen Adressierung des Informationsanbieters 70 und der ebenfalls entbehrlichen Identifizierung des Geräts erfolgt die Aktualisierung der im Gerät 5 gespeicherten Informationen nun gemäß dem in Verbindung mit Figur 2 erläuterten Ablauf.

## Patentansprüche

1. Verfahren zur Aktualisierung von in einem für mobilen Einsatz vorgesehenen Kommunikationsendgerät (5), insbesondere einem Autoradio mit integriertem Mobilfunktelefon (25), gespeicherten Informationen,
wobei ein über aktuelle Informationen verfügender Anbieter (70) durch das Kommunikationsendgerät (5) adressiert wird (205), worauf zwischen Kommunikationsendgerät (5) und Anbieter (70) eine Verbindung hergestellt wird (210),
wobei Informationen vom Anbieter (70) zum Kommunikationsendgerät (5) übertragen werden (230),
und wobei die im Kommunikationsendgerät (5) gespeicherten Informationen durch die übertragenen Informationen ergänzt und/oder ersetzt werden (235),
**dadurch gekennzeichnet,**
**daß** am Kommunikationsendgerät (5) zumindest Teile der vom Informationsanbieter (70) angebotenen Informationen ausgewählt werden (225), und nur die ausgewählten Informationen an das Kommunikationsendgerät (5) übertragen werden.

2. Verfahren nach Anspruch 1, **dadurch gekennzeichnet, daß** zur, vorzugsweise vor, Übertragung der Informationen vom Anbieter (70) an das Kommunikationsendgerät (5) das Kommunikationsendgerät (5) durch den Anbieter (70), vorzugsweise mittels einer dem Kommunikationsendgerät (5) individuell zugeordneten Kennung, die dem Anbieter (70) mitgeteilt wird, identifiziert wird.

3. Verfahren nach Anspruch 1 oder 2,
**dadurch gekennzeichnet,**
**daß** nach Herstellung der Verbindung zwischen Kommunikationsendgerät (5) und Anbieter (70) vom Anbieter (70) eine Liste der verfügbaren Informationen an das Kommunikationsendgerät (5) übertragen wird (220),
**daß** über ein Bedienteil (35) des Kommunikationsendgeräts (5) oder ein mit dem Kommunikationsendgerät (5) verbundenes Bedienteil die für die Aktualisierung der gespeicherten Informationen gewünschten Informationen auswählbar sind,
und **daß** nach Auswahl der gewünschten Informationen diese vom. Anbieter an das Kommunikationsendgerät übertragen werden (230).

4. Verfahren einem der Ansprüche 1 bis 3,
**dadurch gekennzeichnet,**
**daß** es sich bei den vom Anbieter (70) an das Kommunikationsendgerät (5) übertragenen Informationen bzw. Informationsteilen um eine aktualisierte Fassung bzw. aktualisierte Teile des für den Betrieb des Kommunikationsendgeräts erforderlichen Betriebsprogramms handelt.

5. Verfahren nach Anspruch 1 bis 3,
**dadurch gekennzeichnet,**
**daß** es sich bei den vom Anbieter (70) an das Kommunikationsendgerät (5) übertragenen Informationen bzw. Informationsteilen um den Funktionsumfang des Kommunikationsendgeräts erweiternde Teile des für den Betrieb des Kommunikationsendgeräts erforderlichen Betriebsprogramms handelt.

6. Kommunikationsendgerät (5) für mobilen Einsatz, insbesondere Autoradio mit einem Mobilfunktelefon (25), das über einen nichtflüchtigen Speicher (40) für Informationen, vorzugsweise für das zu seinem Betrieb erforderliche Betriebsprogramm, und über eine Sende- und Empfangseinheit (25) verfügt oder mit einer solchen verbindbar ist,
wobei das Kommunikationsendgerät (5) über die Sende- und Empfangseinheit (25) mit einem Anbieter (70) für Informationen verbindbar ist,
wobei zumindest Teile des Informationsspeichers (40) als überschreibbarer bzw. lösch- und neu beschreibbarer Speicher ausgeführt sind,
wobei bei bestehender Verbindung zwischen Kommunikationsendgerät (5) und Anbieter (70) die in dem überschreibbaren bzw. lösch- und neu beschreibbaren Teil des Speichers (40) abgelegten Informationen durch die über die bestehende Verbindung zwischen Anbieter (70) und Kommunikationsendgerät (5) übertragenen Informationen ersetzt und/oder ergänzt werden,
**dadurch gekennzeichnet,**
**daß** die zur Aktualisierung der im Kommunikationsendgerät (5) gespeicherten Informationen gewünschten Informationen mittels des Kommunikationsendgeräts (5) auswählbar sind.

7. Kommunikationsendgerät nach Anspruch 6,
**dadurch gekennzeichnet,**
**daß** die Empfangseinheit (25) des Kommunikationsendgeräts zur Herstellung einer Verbindung zwischen Kommunikationsendgerät und Informationsanbieter in Form eines Mobilfunktelefons innerhalb des Kommunikationsendgeräts (5) realisiert ist.

8. Kommunikationsendgerät nach Anspruch 6 oder 7,
**dadurch gekennzeichnet,**
**daß** das Kommunikationsendgerät (5) über ein Bedienteil (35) verfügt oder mit einem Bedienteil verbindbar ist, über das die zur Aktualisierung der gepeicherten Informationen gewünschten Informationen auswählbar sind.

9. Kommunikationsendgerät nach einem der Ansprüche 6 bis 8,
**dadurch gekennzeichnet,**
**daß** das Kommunikationsendgerät (5) einen weiteren nichtflüchtigen Speicher (45), vorzugsweise in Form eines Nur-Lese-Speichers (ROM) umfaßt, in dem die zur Übertragung von Informationen vom Informationsanbieter (70) zum Kommunikationsendgerät (5) erforderlichen Bestandteile des für den Betrieb des Kommunikationsendgeräts erforderlichen Betriebsprogramms abgelegt sind.

10. Kommunikationsendgerät (5) nach einem der Ansprüche 6 bis 9,
**dadurch gekennzeichnet,**
**daß** das Kommunikationsendgerät (5) eine Ausgabevorrichtung, vorzugsweise in Form einer Anzeigevorrichtung, umfaßt oder mit einer solchen verbindbar ist, mittels der eine nach Herstellung der Verbindung zwischen Kommunikationsendgerät (5) und Informationsanbieter (70) übertragene Liste von seitens des Informationsanbieters verfügbaren Informationen ausgebbar bzw. anzeigbar ist.

## Claims

1. Method for updating information stored in a communication terminal (5) intended for mobile use, particularly a car radio having an integrated mobile radio telephone (25), where a provider (70) having access to current information is addressed (205) by the communication terminal (5), whereupon a connection is set up (210) between communication terminal (5) and provider (70), with information being transmitted (230) from the provider (70) to the communication terminal (5), and with the information stored in the communication terminal (5) being complemented and/or replaced (235) by the transmitted information,
**characterized**
**in that** the communication terminal (5) is used to select (225) at least some of the information provided by the information provider (70), and only the selected information is transmitted to the communication terminal (5).

2. Method according to Claim 1, **characterized in that**, for the purpose of, preferably before, transmitting the information from the provider (70) to the communication terminal (5), the communication terminal (5) is identified by the provider (70), preferably using an identifier which is individually associated with the communication terminal (5) and is communicated to the provider (70).

3. Method according to Claim 1 or 2,
**characterized**
**in that**, when the connection has been set up between communication terminal (5) and provider (70), the provider (70) transmits (220) a list of available information to the communication terminal (5), in that a control section (35) on the communication terminal (5) or a control section connected to the communication terminal (5) can be used to select the information wanted for updating the stored information, and in that, following selection of the desired information, this information is transmitted (230) from the provider to the communication terminal.

4. Method according to one of Claims 1 to 3,
**characterized**
**in that** the information or information portions transmitted from the provider (70) to the communication terminal (5) is/are an updated version or updated portions of the operating program required for operating the communication terminal.

5. Method according to Claim 1 to 3,
**characterized**
**in that** the information or information portions transmitted from the provider (70) to the communication terminal (5) is/are portions of the operating program required for operating the communication terminal which extend the functional scope of the communication terminal.

6. Communication terminal (5) for mobile use, particularly car radio having a mobile radio telephone (25), which has access to a non-volatile memory (40) for information, preferably for the operating program required for operating it, and has access to a transmission and reception unit (25) or can be connected to such a unit, where the communication terminal (5) can be connected to a provider (70) of information by means of the transmission and reception unit (25),
where at least portions of the information memory (40) are in the form of an overwritable or erasable and rewritable memory,
where, when a connection exists between communication terminal (5) and provider (70), the information stored in the overwritable or erasable and rewritable portion of the memory (40) is replaced and/or complemented by the information transmitted over the existing connection between provider (70) and communication terminal (5),
**characterized**
**in that** the information wanted for updating the information stored in the communication terminal (5) can be selected using the communication terminal (5).

7. Communication terminal according to Claim 6,
**characterized**
**in that** the communication terminal's reception unit (25) is implemented in the form of a mobile radio telephone within the communication terminal (5) for the purpose of setting up a connection between communication terminal and information provider.

8. Communication terminal according to Claim 6 or 7,
**characterized**
**in that** the communication terminal (5) has a control section (35) or can be connected to a control section which can be used to select the information wanted for updating the stored information.

9. Communication terminal according to one of Claims 6 to 8,
**characterized**
**in that** the communication terminal (5) comprises a further non-volatile memory (45), preferably in the form of a read-only memory (ROM), which stores those parts of the operating program required for operating the communication terminal which are necessary for transmitting information from the information provider (70) to the communication terminal (5).

10. Communication terminal (5) according to one of Claims 6 to 9,
**characterized**
**in that** the communication terminal (5) comprises an output apparatus, preferably in the form of a display apparatus, or can be connected to such an apparatus, which can be used to output or display a list of information available from the information provider, which list is transmitted following set-up of the connection between communication terminal (5) and information provider (70).

## Revendications

1. Procédé pour actualiser les informations contenues dans un terminal de communication (5) destiné à une application mobile notamment un auto-radio à téléphone mobile intégré (25), selon lequel
on adresse (205) un serveur (70) disponible par des informations actuelles à l'aide du terminal de communication,
puis on établit une liaison (210) entre le terminal de communication (5) et le serveur (70) pour transmettre (230) les informations du serveur (70) au terminal de communication (5),
et on complète les informations enregistrées dans le terminal de communication (5) par les informations transmises et/ou on les remplace (235),
**caractérisé en ce que**
on sélectionne (225) dans le terminal de communication (5) au moins les parties des informations offertes par le serveur d'informations (70) et
on ne transmet au terminal de communication (5) que les informations sélectionnées.

2. Procédé selon la revendication 1,
**caractérisé en ce que**
notamment avant de transmettre les informations du serveur (70) vers le terminal de communication (5), le serveur (70) identifie le terminal de communication (5) notamment à l'aide d'une référence associée individuellement par le serveur (70) au terminal de communication (5).

3. Procédé selon l'une des revendications 1 ou 2,
**caractérisé en ce qu'**
après la réalisation de la liaison entre le terminal de communication (5) et le serveur (70), ce dernier (70) transmet (220) une liste d'informations disponibles au terminal de communication (5), et
par la partie de commande (35) du terminal de communication (5) ou une partie de commande reliée à ce terminal de communication (5), on sélectionne les informations souhaitées pour actualiser les informations mises en mémoire, et
après la sélection des informations souhaitées, celles-ci sont transmises (230) par le serveur au terminal de communication.

4. Procédé selon l'une des revendications 1 à 3,
**caractérisé en ce que**
les informations ou parties d'informations transmises par le serveur (70) au terminal de communication (5) sont constituées par la version actualisée ou les parties actualisées du programme de fonctionnement nécessaires au terminal de communication.

5. Procédé selon l'une des revendications 1 à 3,
**caractérisé en ce que**
les informations ou parties d'informations transmises par le serveur (70) au terminal de communication (5) sont des parties étendant le programme de fonctionnement nécessaire au terminal de communication pour élargir son domaine de fonctionnement.

6. Terminal de communication (5) pour une application mobile notamment auto-radio avec téléphone mobile (25), qui dispose de ou peut être relié à une mémoire non volatile (40) pour des informations notamment le programme de fonctionnement qui lui est nécessaire, et une unité d'émission et de réception (25), dans lequel
le terminal de communication (5) peut être relié à un serveur (70) d'informations par l'unité d'émission et de réception (25),
au moins les parties de la mémoire d'informations (40) sont réalisées comme mémoire surscriptible ou effaçable et réinscriptible,
et lorsque la liaison est établie entre le terminal de communication (5) et le serveur (70), les informations contenues dans la partie de la mémoire (40) qui peuvent être suscrites ou effacées et réinscrites sont remplacées ou complétées par les informations contenues dans la partie de la mémoire (40) qui peuvent être surscrites ou effacées et réinscrites, sont remplacées ou complétées par les informations transmises par la liaison existant entre le serveur (70) et le terminal de communication (5),
**caractérisé en ce que**
les informations souhaitées pour actualiser les informations contenues dans le terminal de communication (5) sont sélectionnées à l'aide du terminal de communication (5).

7. Terminal de communication selon la revendication 6,
**caractérisé en ce que**
l'unité de réception (25) du terminal de communication est réalisée pour établir une liaison entre le terminal de communication et le serveur d'informations sous la forme d'un téléphone mobile dans le terminal de communication (5).

8. Terminal de communication selon la revendication 6 ou 7,
**caractérisé en ce que**
le terminal de communication (5) comporte une partie de commande (35) ou peut être relié à une partie de commande par laquelle on sélectionne les informations souhaitées pour actualiser les informations enregistrées.

9. Terminal de communication selon l'une des revendications 6 à 8,
**caractérisé en ce que**
le terminal de communication (5) comporte une autre mémoire non volatile (45) de préférence sous la forme d'une mémoire morte ROM contenant les parties du programme de fonctionnement nécessaires au terminal de communication pour transmettre les informations du serveur d'informations (70) au terminal de communication (5).

10. Terminal de communication selon l'une des revendications 6 à 9,
**caractérisé en ce que**
le terminal de communication (5) comprend un dispositif d'émission notamment sous la forme d'un dispositif d'affichage ou peut être relié à un tel dispositif à l'aide duquel on peut émettre ou afficher une liste d'informations disponible chez le serveur d'informations après l'établissement de la liaison entre le terminal de communication (5) et le serveur d'informations (70).
